Europäisches Patentamt

European Patent Office

Office européen des brevets

(11) Publication number: **0 419 429 A1**

## EUROPEAN PATENT APPLICATION

(21) Application number: 90850273.5

(22) Date of filing: 19.07.90

(51) Int. Cl.5: **H04B 7/02**

(30) Priority: 12.09.89 SE 8902993

(43) Date of publication of application:
27.03.91 Bulletin 91/13

(84) Designated Contracting States:
AT BE CH DE DK ES FR GB GR IT LI LU NL

(71) Applicant: **TELEFONAKTIEBOLAGET L M ERICSSON**

**S-126 25 Stockholm(SE)**

(72) Inventor: **Dahlin, Jan Erik Ake Steinar**
**Saningsvägen 152**
**S-175 45 Järfälla(SE)**

(74) Representative: **Lövgren, Tage et al**
**Telefonaktiebolaget L M Ericsson Patent Department**
**S-126 25 Stockholm(SE)**

(54) Method of reducing the risk for poor reception in a time multiplexed radio communication system.

(57) A method for reducing the risk of poor reception in a time multiplex radiocommunication system which includes at least one fixed station and at least one mobile station, when transmitting from one of the fixed stations to one of the mobile stations, as a result of the reflection of transmitted signals against different objects. Transmission is effected in the fixed station from two antennas (19, 20), each of which receives signals from a respective branch. The signals in the two branches have mutually the same frequency and the same information content, but the phase position of one signal in one branch is changed (13, 14) in time, e.g. by phase jumping, in relation to the phase position of the signal in the other branch. In this way, any so-called zero points which may be present are moved geographically, i.e. points with no or with low signal strength. More than two antennas can be used in the fixed station for transmitting signals whose phase positions all vary mutually in time.

# METHOD OF REDUCING THE RISK FOR POOR RECEPTION IN A TIME MULTIPLEXED RADIO COMMUNICATION SYSTEM

## TECHNICAL FIELD

The present invention pertains to a time multiplexed radiocommunication system which includes at least one fixed station and at least one mobile station, and relates to a method of reducing the risk of poor reception due to the reflection of transmitted signals against different objects when transmitting from one of the fixed stations to one of the mobile stations.

## BACKGROUND ART

So-called fading will sometimes occur in radiocommunication transmissions between two stations of which at least one is mobile. Fading is the result of reflection of the radio signals against different objects, such that several signals are received which have passed along different routes between transmitter and receiver. Consequently, the strength of the received signal will vary in dependence on the mutual positions of the transmitter and receiver and can briefly go down to zero or to the proximity of zero. The speed between variations in signal strength is proportional to the relative speed between the stations. On those occasions when the relative speed is zero, the connection may be broken because the input signal on the receiver of the one station is excessively low. This can occur in a mobile telephone system, for instance, when a call is made from a vehicle which is stationary on a geographic point where the received signal strength is very low, or when the vehicle moves slowly in such a location. Such points are normally referred to as zero points.

It is known to utilize so-called space diversity in order to avoid poor reception due to the occurrence of zero points. In this case, a fixed station, such as a base station in a mobile telephony system, is equipped with two receiver antennas which are placed at an appropriate distance apart. A so-called diversity effect is obtained in the fixed station, with the aid of a suitable addition function of two received signals. This is based on the assumption that the probability of both antennas being located simultaneously on a zero point is small. This method, however, cannot be applied to improve reception in mobile stations, since mobile stations cannot be operably equipped with two antennas for practical reasons.

It is known to apply transmission with frequency jumps in a time multiplexed system having digital modulation. In this case different information sections, so-called transmission bursts, of different frequencies are transmitted. This method is based on the assumption that the locations of the zero points are frequency dependent and that the probability of a geographic point being the zero point for more than one frequency is small. The method is operable, for instance, for systems of the type GSM (Groupe Speciale Mobile) with deep so-called interleaving, i.e. information blocks divided on many "transmission bursts".

In radio systems which have small cell radii and therewith relatively short transmission ranges, e.g. PCN-type systems (Personal Communication Network), frequency jumps do not improve the reception at zero points to any marked degree. This is due to low time dispersion, i.e. there is a small time difference between signals which are received subsequent to having travelled different paths to the receiver. Frequency jumps of reasonable sizes do not change the geographic position of the zero points to any appreciable extent in such systems.

## DISCLOSURE OF THE INVENTION

The object of the present invention is to propose a method of the kind defined in the introduction, with which problems caused by poor reception due to the occurrence of so-called zero points are avoided even in systems which have relatively small cell radii and small time dispersion. This is achieved by transmitting from the fixed station from two antennas each of which is supplied with a respective signal of mutually the same frequency and the same information content, but of which signals the phase position of one signal is changed in time relative to the phase position of the other signal. It will be understood that the fixed station may be equipped with more than two antennas for transmitting signals whose phase positions all vary mutually in time.

When applying this method, any zero points that may occur will move geographically, even in systems having small time dispersion. The method is particularly operable in those instances when the fixed station is equipped with two antennas for the purpose of obtaining a space diversity effect, since the two antennas can then be used both for transmitting and receiving purposes.

The characteristic features of the present invention are set forth in the following claims.

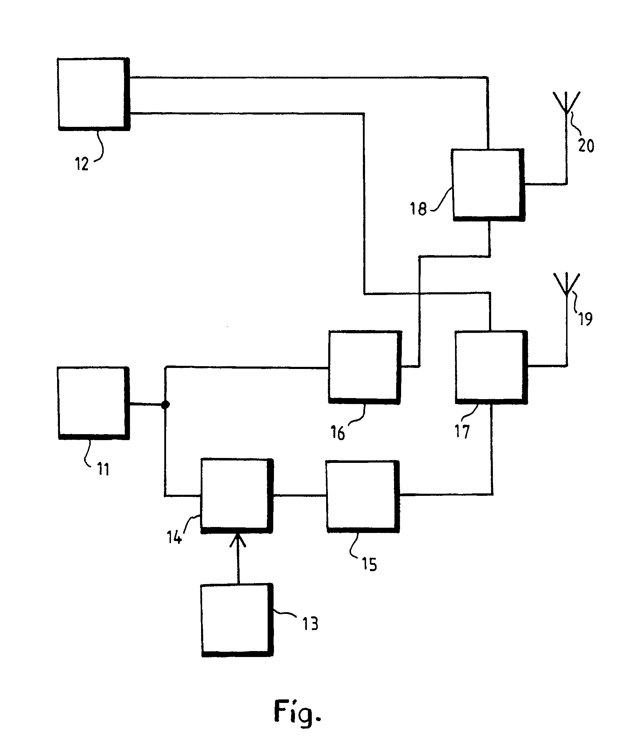

## BRIEF DESCRIPTION OF THE DRAWING

The invention will now be described in more detail with reference to the drawing, the single Figure of which illustrates an exemplifying embodiment of an arrangement incorporated in the fixed station for carrying out the method according to the invention.

## BEST MODE FOR CARRYING OUT THE INVENTION

The arrangement illustrated in the drawing is intended to utilize two antennas, both for receiving and transmitting. The antennas are referenced 19, 20 and when in their receiving mode pass signals received therein to a receiving device 12, via two duplex filters 17, 18 of known kind. When transmitting, signals are produced in a transmitting device 11 and delivered to two branches. The signals in one branch are conducted to the antenna 20, via a power amplifier 16 and the duplex filter 18. The signals in the other branch are conducted to the antenna 19 via a phase shifter 14, a power amplifier 15 and the duplex filter 17. The phase shifter 14 shifts the phase of the signals passing to the antenna 19 in response to control signals from a control device 13.

In radio communication systems of the GSM-type having short "transmission bursts", the phase may not be shifted during an ongoing burst. This is because such systems do not include an equalizer capable of adapting to such phase changes. Instead, the phase position is changed with the aid of the devices 13 and 14, by phase jumping between two bursts, suitably to change the phase position for each new burst. When the phase position of the antenna 19 is changed for each new burst, it is probable that at most one burst will be lost even when the mobile station is located in a zero point, since the zero point will move with each new burst.

It can be mentioned by way of example that in the case of GSM-systems, the so-called interleaving depth is equal to eight, i.e. each information block is divided into eight parts which are transmitted on eight occasions. If each such occasion has its own phase position, it is improbable that two such phase positions will result in a receiver zero point. Consequently, at least eight mutually different phase positions should be applied in GSM-systems. The phase positions may, for instance, be 0, 45, 90, 135 degrees, etc. A single lost part of an information block can be reconstructed in the receiver with the aid of the remaining parts of said block.

Time multiplex systems are also found in which the bursts are of relatively long duration and which utilize equalizers which adapt to phase positions caused by channel changes. A channel change may, for instance, be due to a vehicle which contains a mobile station driving away. In this case, a continuous phase shift may be applied instead of a phase jump, wherein the phase position of one transmission signal is changed constantly in relation to the phase position of the other transmission signal.

It will be understood that the illustrated arrangement can be modified in many ways. For instance, separate antennas can be used for transmission and receiving purposes. Neither is it necessary to use two receiving antennas in the fixed station. As mentioned above, several transmission antennas can be incorporated in the fixed station, wherein all transmission signals will have phase positions which vary mutually in time. The radio communication system may also include more than one fixed station.

It has been presumed above that modulation takes place in the transmitting device 11, whereby phase shifting of radio frequency signals is carried out. However, it is possible to carry out the phase shifting on a base band level instead. Then transmitting device 11 should generate base band signals, and modulation of these should be carried out in two modulators, which should be incorporated in front of the power amplifiers 16 and 15. The modulator which should be incorporated in front of amplifier 15 should be connected between phase shifter 14 and amplifier 15.

## Claims

1. A method for reducing the risk of poor reception in a time multiplex radiocommunication system which includes at least one fixed station and at least one mobile station, when transmitting from one of the fixed stations to one of the mobile stations, as a result of reflection of transmitted signals against different objects, characterized by transmitting from at least two antennas (19, 20) in the fixed station respective signals which have mutually the same frequency and the same information content but the phase positions of which vary in time in relation to one another.

2. A method according to Claim 1, **characterized** by transmitting in the fixed station from two antennas, and by changing the phase position (13, 14) of the one signal stepwise by phase jumping.

3. A method according to Claim 2, **characterized** by changing the phase position (13, 14) with each new transmission burst.

4. A method according to Claim 1, **characterized** by transmitting in the fixed station from two antennas, and by continuously changing the phase position (13, 14) of said one signal.

5. A method according to any one of Claims 2-4, **characterized** by the phase position being changed on a base band level.

6. A method according to any of Claims 2-4, **characterized** by the phase position being changed on a radio frequency level.

Fig.

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| A | US-A-4 490 830 (T. KAI et al) * Column 4, line 61 - column 5, line 5; claims 1,4,5,6 * | 1 | H 04 B 7/02 |

-----

|  |  |  | TECHNICAL FIELDS SEARCHED (Int Cl⁵) |
|---|---|---|---|
|  |  |  | H 04 B |

The present search report has been drawn up for all claims

| Place of search | Date of completion of the search | Examiner |
|---|---|---|
| STOCKHOLM | 26-11-1990 | MAGNUSSON G. |